# NEUE EUROPÄISCHE PATENTSCHRIFT

(11) **EP 0 883 489 B2**
(45) Veröffentlichungstag und Bekanntmachung des Hinweises auf die Entscheidung über den Einspruch: **05.09.2007**
(45) Hinweis auf die Patenterteilung: 02.11.2000
(21) Anmeldenummer: 97920446.8
(22) Anmeldetag: 07.05.1997
(51) Int. Cl.: B32B 33/00, B32B 27/20

(54) **OBERFLÄCHENRAUHES VERPACKUNGSELEMENT**
ROUGH SURFACE PACKAGING ELEMENT
ELEMENT D'EMBALLAGE A SURFACE RUGUEUSE

(30) Priorität: 17.12.1996 AT 220096
(43) Veröffentlichungstag der Anmeldung: 16.12.1998
(73) Patentinhaber: TEICH AKTIENGESELLSCHAFT, 3200 Obergrafendorf (AT)
(72) Erfinder: ZUSER, Wilhelm, A-3108 St. Pölten (AT); NEKULA, Lambert, A-3202 Hofstetten (AT); REITERER, Franz, A-3052 Neustift-Innermanzing (AT)
(74) Vertreter: Dungler, Karin
(86) Internationale Anmeldenummer: PCT/AT1997/000091
(87) Internationale Veröffentlichungsnummer: WO 1998/026931

(56) Entgegenhaltungen:
- EP-A- 0 089 746
- EP-A- 0 149 180
- EP-A- 0 242 252
- EP-A- 0 367 613
- EP-A- 0 402 942
- EP-A- 0 450 247
- EP-A- 0 538 746
- EP-A- 0 619 183
- DE-A- 2 408 287
- DE-A- 3 041 869
- DE-A- 3 706 962
- FR-A- 2 255 183
- FR-A- 2 500 019
- FR-A- 2 731 986
- FR-B- 2 720 976
- US-A- 4 778 058
- US-A- 5 342 684
- US-A- 5 516 563
- DATABASE WPI Section Ch, Week 7940 Derwent Publications Ltd., London, GB; Class A32, AN 79-72940B XP002054747 & JP 54 027 034 B (TOYOBO KK) , 7.September 1979
- DATABASE WPI Section Ch, Week 9519 Derwent Publications Ltd., London, GB; Class A35, AN 95-144313 XP002054748 & JP 07 068 692 A (TOYOBO KK) , 14.März 1995
- DATABASE WPI Section Ch, Week 9631 Derwent Publications Ltd., London, GB; Class A28, AN 96-306853 XP002054749 & JP 08 134 409 A (OJI KAKO KK) , 28.Mai 1996
- DATABASE WPI Section Ch, Week 9425 Derwent Publications Ltd., London, GB; Class A92, AN 94-205856 XP002054750 & JP 06 143 518 A (MITSUBISHI PETROCHEMICAL CO LTD) , 24.Mai 1994
- DATABASE WPI Section Ch, Week 8807 Derwent Publications Ltd., London, GB; Class A18, AN 88-047441 XP002054751 & JP 63 006 200 A (YG DAISAN SHIKOSHA) , 12.Januar 1988
- Helio Ggravure et Tirage,Georges Baudry, Institut national des industries et arts grafiques, 3éme Ed., 1963, pages 4-13
- R.Gaechter und H. Mueller, Taschenbuch der Kunststoff-Additive, 2. Ausgabe, Carl Hanser Verlag München/Wien, 1983, Seite 348 (Abschnitt 6.4.2), Seite 420 (Abschnitt 9-3-1)

## Beschreibung

### Technisches Gebiet

Die Erfindung betrifft ein Verpackungselement, bestehend aus einem Trägermaterial, welches an der dem Packungsgut abgewandten Seite mit einer ein Druckbild aufweisenden Schicht und an der dem Pakkungsgut zugewandten Seite mit einer Beschichtung versehen ist.

### Stand der Technik

Verpackungselemente der eingangs genannten Art werden beispielsweise als Platinen für Joghurtbecher oder als Flaschenhals-Etiketten eingesetzt. Zur Kennzeichnung der Ware werden an den Verpackungselementen an der dem Packungsgut abgewandten Seite Aufdrucke angebracht. Ferner ist es bekannt, an der dem Packungsgut zugewandten Seite, beispielsweise bei der Herstellung von Joghurt-Platinen eine Beschichtung in Form eines Heißsiegellackes aufzubringen. Durch die Maßnahme dieses Heißsiegellackes wird eine luftdichte, aber gleichzeitig peelfähige Verbindung zwischen dem Joghurt-Becher und der Platine ausgebildet.

Zur Herstellung dieser Verpackungselemente wird das Trägermaterial, beispielsweise Aluminium in Form von Rollenware eingesetzt, welches kontinuierlich an der dem Packungsgut zugewandten Seite mit einer Heißsiegellackschicht und an der dem Packungsgut abgewandten Seite mit einer ein Druckbild aufweisenden Schicht versehen wird. Um nunmehr die Verpackungselemente der Form des Packungsgutes anzupassen, werden entsprechend geformte Stanzwerkzeuge eingesetzt. Nach dem Stanzvorgang fällt nunmehr ein Stapel von Verpackungselementen wie Joghurt-Platinen an. Da diese eine beidseitig glatte Oberfläche aufweisen, kommt es zu Problemen beim Entstapeln. Die Joghurt-Platinen haften nämlich so stark aneinander, daß teilweise zwei oder mehrere Platinen gleichzeitig entstapelt werden.

Um nunmehr diesen unerwünschten Effekt zu beseitigen, hat man den bedruckten Folienverbund vor dem Stanzverfahren einem Prägeschritt unterworfen. Dadurch werden oberflächenrauhe Folien erzeugt, welche leicht entstapelt werden, da bedingt durch die eingeschlossene Luft zwischen den Prägestegen ein Anhaften der Folien aneinander verhindert wird. Der Prägevorgang hat jedoch den Nachteil, daß das Druckbild verzerrt oder sogar zerstört wird.

Aufgabe der Erfindung ist es nun, diesen bekannten Nachteil zu vermeiden und gleichzeitig leicht handhabbare Becherplatinen bereitzustellen.

Gemäß der EP-A2-089 746 wird das Kunststoffmaterial für die Erzeugung von Zahnpastatuben unmittelbar nach dessen Herstellung einer Kühlwalze, welche die Funktion einer Prägewalze hat, zugeführt. Durch die erzielte Prägung an der Kunststoffmaterial-Oberfläche, ist die anschließende Entstapelung der Verpackungsmaterial-Zuschnitte wesentlich erleichtert.

Anstelle durch Prägung kann Oberflächenrauhigkeit auch durch Zugabe von Antiblockmitteln erzielt werden (siehe dazu R. GÄCHTER und H. MÜLLER, Taschenbuch der Kunststoff-Additive, 2. Ausgabe, Carl Hauser Verlag, München - Wien, 1983, Seite 346).

### Darstellung der Erfindung

Gegenstand der Erfindung ist eine Becherplatine (1), bestehend aus einem Trägermaterial (5), welches an der dem Packungsgut abgewandten Seite (2) mit einer ein Druckbild aufweisenden Schicht (4) und an der dem Packungsgut zugewandten Seite (3) mit einer oberflächenrauhen Beschichtung (6) mit einer Rauhtiefe von 1 - 100 µm versehen ist, dadurch gekennzeichnet, daß die oberflächenrauhe Beschichtung als oberflächenrauher Aufdruck in Form von geometrisch angeordneten Abstandshaltern (8, 10) vorliegt, welcher an der dem Packungsgut zugewandten Seite zusätzlich siegelfähig ist und zusätzlich körnige Füllstoffe aufweist.

Geometrisch angeordnete Abstandshalter können auch an der dem Packungsgut abgewandten Seite vorgesehen sein; sie weisen vorteilhafterweise eine Höhe von 1 - 100 µm, vorzugsweise von 4 - 15 µm, auf.

Das Trägermaterial des erfindungsgemäßen Verpackungselementes besteht vorteilhafterweise aus Aluminium, Papier sowie Kunststoff, wobei als Kunststoff vorzugsweise solcher auf Basis von Polypropylen, Polyethylen, Polyamid oder Polyethylenterephtalat eingesetzt wird. Ferner können vorteilhafterweise als Trägermaterial Folienverbunde mit folgender Materialkombination ausgehend vom Packungsgut eingesetzt werden: Aluminium/Aluminium, Aluminium/Kunststoff, Kunststoff/Aluminium, Kunststoff/ Kunststoff, Aluminium/Papier, Papier/Aluminium, Papier/Papier.

Die erfindungsgemäße Becher-Platine kann zwischen dem Trägermaterial und der oberflächenrauhen, siegelfähigen Beschichtung eine weitere siegelfähige Beschichtung aufweisen, deren Oberflächenrauhigkeit gleich 0 oder nahezu gleich 0 ist.

### Kurze Beschreibung der Zeichnungen im Zusammenhang mit einem vorteilhaften Weg zur Ausführung der Erfindung

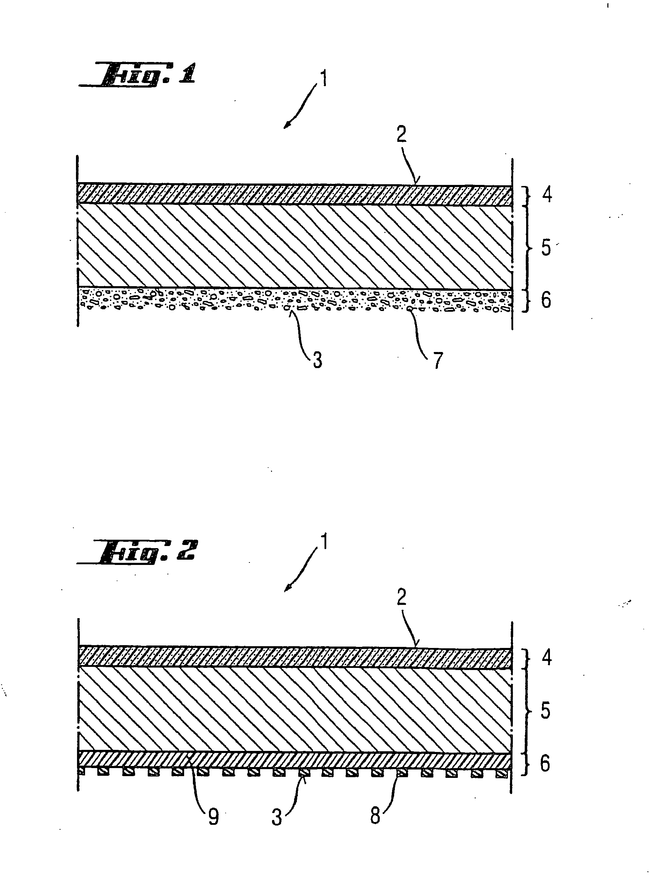

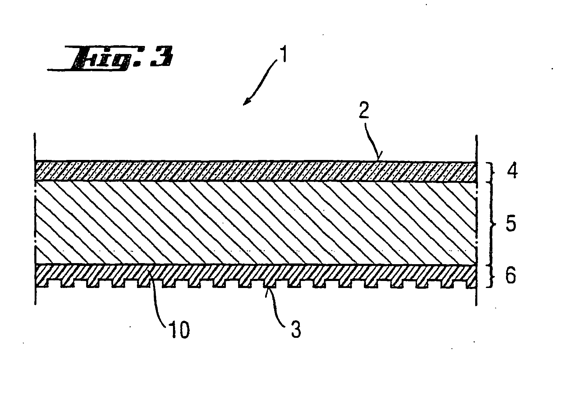

Die Erfindung wird nunmehr anhand der Fig.1 - 3 näher erläutert, wobei die Figuren 2 und 3 die Erfindung veranschaülichen, und Fig. 1 ein durch den Stand der Technik nahegelegtes Vergleichsbeispiel darstellen soll.

Diese zeigen nunmehr das Verpackungselement 1, welches im wesentlichen aus dem Trägermaterial 5 besteht, auf welchem an der dem Packungsgut abgewandten Seite 2 eine ein Druckbild aufweisende Schicht 4 vorgesehen ist. An der dem Packungsgut zugewandten Seite 3 ist die oberflächenrauhe Beschichtung 6 vorgesehen.

Die Schichtdicken betragen für die das Druckbild aufweisende Schicht 4, maximal 30 µm und für die oberflächenrauhe Beschichtung 6, welche an der dem Packungsgut zugewandten Seite liegt, maximal 120 µm.

Die Schichtdicke des Trägermaterials 5 beträgt 5 - 200 µm; im Falle von Aluminium als Trägermaterial liegt die Schichtdicke im Bereich von 10 - 70 µm, für Papier im Bereich von 20 - 150 µm, für Kunststoff im Bereich von 7 - 150 µm.

Wird die erfindungsgemäße Becherplatine als Deckelelement für Joghurtbecher eingesetzt, so besteht das Trägermaterial vorteilhafterweise aus Aluminium mit einer Zugfestigkeit von 60 - 250 N/mm².

Die das Druckbild aufweisende Schicht 4 wird derart hergestellt, daß in an sich bekannter Weise auf das Trägermaterial 5 ein Druckvorlack (nicht dargestellt) aufgebracht wird, um die ausreichende Haftung zwischen Druck und Trägermaterial zu gewährleisten. Auf das mit dem Druckvorlack beschichtete Trägermaterial wird nunmehr ein Druckbild beispielsweise durch Tiefdruck- oder Flexodruckverfahren erzeugt. Um das Druckbild zu schützen, wird dieses anschließend mit einem gleitfähigen Überlack versehen.

An der dem Packungsgut zugewandten Seite wird nunmehr das Trägermaterial 5 mit der oberflächenrauhen Beschichtung 6 versehen.

Gemäß Fig. 1 wird die Oberflächenrauhigkeit der Beschichtung 6 dadurch erzeugt, daß körnige Füllstoffe 7 eingesetzt werden. Da sich diese körnigen Füllstoffe u.a. an der dem Packungsgut zugewandten Seite 3 anlagern, wird eine Oberflächenrauhigkeit von mindestens 1 µm erzeugt. Auch durch diese relativ niedrigen Werte hinsichtlich Oberflächenrauhigkeit kann der Entstapelungsvorgang bei dem eingangs geschilderten Verfahren erleichtert werden.

Das gemäß Fig. 2 dargestellte erfindungsgemäße Verpackungselement 1 weist an der dem Pakkungsgut zugewandten Seite 3 eine oberflächenrauhe Beschichtung 6 auf, welche eine Beschichtung 9 mit einer Oberflächenrauhigkeit von 0 oder nahezu gleich 0 aufweist. Auf diese Beschichtung wird mit Hilfe einer entsprechend geformten Druckwalze eine weitere Beschichtung aufgebracht, sodaß die Abstandshalter 8 in geometrischer Anordnung auf der dem Packungsgut zugewandten Oberflächenseite 3 ausgebildet werden. Dabei weist die Druckwalzenoberfläche beispielsweise Vertiefungen auf, die der geometrischen Anordnung sowie der Form der Abstandshalter entsprechen. Die Beschichtung, welche zur Herstellung der Abstandshalter 8 eingesetzt wird, enthält zusätzlich körnige Füllstoffe.

Fig. 3 zeigt ebenso eine oberflächenrauhe Beschichtung 6, welche die Abstandshalter 10 in geometrischer Anordnung aufweist. Dieses Verpackungselement gemäß Fig. 3 kann in einem besonders leicht durchführbaren Verfahren hergestellt werden, da unmittelbar auf das Trägermaterial 5 mit Hilfe einer entsprechend geformten Druckwalze eine Beschichtung aufgebracht wird, sodaß die Abstandshalter 10 erzeugt werden.

Die Druckwalze ist so geformt, daß Beschichtungsstärken von 1 - 30 µm und an geometrisch angeordneten Stellen durch entsprechende Vertiefungen in der Druckwalzenoberfläche Beschichtungsstärken von 4 - 100 µm möglich sind.

### Gewerbliche Anwendbarkeit

Das erfindungsgemäße Verpackungselement eignet sich insbesondere als Deckelelement für Joghurtbecher. Bei dieser Verwendung ist es notwendig, die oberflächenrauhe Beschichtung in Form einer siegelfähigen Schicht bereitzustellen, sodaß eine luftdichte, jedoch gleichzeitig peelfähige Verbindung zwischen Deckel und Joghurtbecher entsteht.

## Patentansprüche

1. Becherplatine (1), bestehend aus einem Trägermaterial, (5), welches an der dem Packungsgut abgewandten Seite (2) mit einer ein Druckbild aufweisenden Schicht (4) und an der dem Pakkungsgut zugewandten Seite (3) mit einer oberflächenrauhen Beschichtung (6) mit einer Rauhtiefe von 1 - 100 µm versehen ist, **dadurch gekennzeichnet, dass** die oberflächenrauhe Beschichtung als oberflächenrauher Aufdruck in Form von geometrisch angeordneten Abstandshaltern (8, 10) vorliegt, welcher an der dem Packungsgut zugewandten Seite zusätzlich siegelfähig ist und zusätzlich körnige Füllstoffe aufweist.

2. Becherplatine nach Anspruch 1, **dadurch gekennzeichnet, dass** geometrisch angeordnete Abstandshalter auch an der dem Pakkungsgut abgewandten Seite (2) vorgesehen sind.

3. Becherplatine nach Anspruch 1 oder 2, **dadurch gekennzeichnet, dass** die Abstandshalter eine Höhe von 4 - 15 µm aufweisen.

4. Becherplatine nach einem der Ansprüche 1 - 3, **dadurch gekennzeichnet, dass** das Trägermaterial der Becherplatine aus Aluminium, Papier oder Kunststoff besteht.

5. Becherplatine nach Anspruch 4, **dadurch gekennzeichnet, dass** der Kunststoff im Trägermaterial auf Basis von Polypropylen, Polyethylen, Polyamid oder Polyethylenterephthalat vorliegt.

6. Becherplatine nach einem der Ansprüche 1 - 5, **dadurch gekennzeichnet, dass** das Trägermaterial aus Folienverbunden mit folgender Materialkombination ausgehend vom Packungsgut besteht: Aluminium/Aluminium, Aluminium/Kunststoff, Kunststoff/Aluminium, Kunststoff/Kunststoff, Aluminium/Papier, Papier/Aluminium, Papier/Papier.

7. Becherplatine nach Anspruch 1, **dadurch gekennzeichnet, dass** zwischen dem Trägermaterial und der oberflächenrauhen, siegelfähigen Beschichtung, eine zusätzliche siegelfähige Beschichtung, deren Oberflächenrauhigkeit gleich 0 oder nahezu gleich 0 ist, vorgesehen ist.

## Claims

1. Pot lid (1) comprising a carrier material (5) which is provided with a layer (4), which has a printed image on the side (2) orientated away from the item to be packaged, and provided with a rough-surface coating (6) having a rough depth of 1 - 100 µm on the side (3) orientated towards the item to be packaged, **characterised in that** the rough-surface coating occurs as a rough-surface imprint in the configuration of geometrically disposed spacers (8, 10), said imprint being sealable in addition on the side orientated towards the item to be packaged and having in addition grainy filling materials.

2. Pot lid according to claim 1, **characterised in that** geometrically disposed spacers are also provided on the side (2) orientated away from the item to be packaged.

3. Pot lid according to claim 1 or 2, **characterised in that** the spacers have a height of 4 - 15 µm.

4. Pot lid according to one of the claims 1 - 3, **characterised in that** the carrier material of the pot lid is made of aluminium, paper or plastic material.

5. Pot lid according to claim 4, **characterised in that** the plastic material occurs in the carrier material based on polypropylene, polyethylene, polyamide or polyethylene terephthalate.

6. Pot lid according to one of the claims 1 - 5, **characterised in that** the carrier material is made of foil composites with the following material combination, starting from the item to be packaged; aluminium/aluminium, aluminium/plastic material, plastic material/aluminium, plastic material/plastic material, aluminium/paper, paper/aluminium, paper/paper.

7. Pot lid according to claim 1, **characterised in that** an additional sealable coating, the surface roughness of which is equal to 0 or almost equal to 0, is provided between the carrier material and the rough-surface, sealable coating.

## Revendications

1. Feuille (1) à récipients, constituée d'un support (5) muni, du côté (2) opposé au produit à conditionner, d'une couche (4) présentant un décor et, du côté (3) du produit à conditionner, d'un revêtement rugueux (6) dont la surface présente des aspérités profondes de 1 à 100 µm, **caractérisée en ce que** le revêtement rugueux se présente comme une surcharge d'impression qui rend la surface rugueuse et prend la forme de cales d'espacement (8, 10) disposées de façon régulière, qui est apte au scellage du côté du produit à conditionner et comporte en outre des charges granulaires.

2. Feuille à récipients conforme à la revendication 1, **caractérisée en ce qu'**elle comporte aussi des cales d'espacement régulièrement disposées du côté (2) opposé au produit à conditionner.

3. Feuille à récipients conforme à la revendication 1 ou 2, **caractérisée en ce que** les cales d'espacement sont hautes de 4 à 15 µm.

4. Feuille à récipients conforme à l'une des revendications 1 à 3, **caractérisée en ce que** le support de la feuille à récipients est en aluminium, en papier et/ou en matière synthétique.

5. Feuille à récipients conforme à la revendication 4, **caractérisée en ce que** la matière plastique du support est à base de polypropylène, polyéthylène, polyamide ou polyéthylène téréphtalate.

6. Feuille à récipients conforme à l'une des revendications 1 à 5, **caractérisée en ce que** le support est constitué d'une feuille composite dans laquelle sont combinés les matériaux suivants, en partant du produit à conditionner: aluminium/aluminium, aluminium/plastique, plastique/aluminium, plastique/plastique, aluminium/papier, papier/aluminium, papier/papier.

7. Feuille à récipients conforme à la revendication 1, **caractérisée en ce qu'**il y a, entre le support et le revêtement rugueux apte au scellage, une couche supplémentaire de revêtement apte au scellage dont la rugosité de surface est nulle ou presque nulle.
